# NEUE EUROPÄISCHE PATENTSCHRIFT

(11) **EP 1 680 847 B2**
(45) Veröffentlichungstag und Bekanntmachung des Hinweises auf die Entscheidung über den Einspruch: **17.02.2016**
(45) Hinweis auf die Patenterteilung: 10.10.2007
(21) Anmeldenummer: 04790704.3
(22) Anmeldetag: 21.10.2004
(51) Int. Cl.: H02G 11/00

(54) **VORRICHTUNG ZUR FÜHRUNG MINDESTENS EINER LEITUNG**
DEVICE FOR GUIDING AT LEAST ONE LINE
DISPOSITIF POUR GUIDER AU MOINS UNE LIGNE

(30) Priorität: 07.11.2003 DE 10352461
(43) Veröffentlichungstag der Anmeldung: 19.07.2006
(73) Patentinhaber: Murrplastik System-Technik GmbH, 71570 Oppenweiler (DE)
(72) Erfinder: JOSTMEIER, Helmut, 74420 Oberrot b. Gaildorf (DE); FUNK, Rainer, 71543 Wüstenrot (DE)
(74) Vertreter: Reule, Hanspeter
(86) Internationale Anmeldenummer: PCT/EP2004/011897
(87) Internationale Veröffentlichungsnummer: WO 2005/048432

(56) Entgegenhaltungen:
- EP-A- 0 789 167
- DE-A1- 19 523 105
- DE-U1- 7 740 020
- US-A- 5 322 480
- US-A- 5 332 865

## Beschreibung

Die Erfindung betrifft eine Ablegevorrichtung gemäß Oberbegriff des Anspruchs 1 bzw. eine Ablegevorrichtung gemäß Oberbegriff des Anspruchs 18.

Leitungen, insbesondere elektrische Leitungen, die der Versorgung von beweglichen Maschinen dienen, werden, um sie vor Beschädigungen zu schützen, in einer Ablegewanne geführt. Beim Bewegen der angeschlossenen Maschine werden die Leitungen in der Ablegewanne bewegt, so dass sie oder sie umgebende Umhüllungen an deren Innenflächen entlang schleifen. Durch die zwischen der Leitung und der Innenfläche der Ablegewanne auftretende Reibung kommt es zu einem Verschleiß der Leitung.

Aus der US 5 332 865 ist eine Ablegevorrichtung für eine Leitung bekannt, bei der in einer Ablegewanne ein Obertrum der Leitung auf einem Untertrum abgelegt wird. Zwischen dem Obertrum und dem Untertrum ist ein Band angeordnet, das Obertrum und Untertrum im Abstand zueinander hält.

Aus der EP 0 789 167 A1 ist eine Energieführungskette bekannt, die aus einer Vielzahl von gelenkig miteinander verbundenen Kettengliedern besteht, in deren Innerem mindestens eine Leitung aufgenommen ist. Aus der JP 01288588A ist ein Kabel bekannt, das auf einer Seite zur besseren Führung mit Magneten versehen ist.

Es ist Aufgabe der Erfindung, eine Vorrichtung der eingangs genannten Art derart weiterzubilden, dass die Leitung einem geringeren Verschleiß ausgesetzt ist.

Die Aufgabe wird erfindungsgemäß durch eine Ablegevorrichtung mit den Merkmalen des Patentanspruchs 1 bzw. durch eine Ablegevorrichtung mit den Merkmalen des Anspruchs 18 gelöst.

Der Erfindung liegt der Gedanke zugrunde, die Leitung oder eine sie schützende Hülle zumindest teilweise berührungslos in der Ablegewanne zu führen. Zumindest an den berührungslos geführten Abschnitten ist die Oberfläche der Leitung bzw. der sie umgebenden Hülle keinem Abrieb ausgesetzt, so dass Beschädigungen vermieden werden und die Lebensdauer verlängert wird. Berührungslos werden zweckmäßig die Abschnitte geführt, die relativ zur Ablegewanne oder zu anderen Abschnitten der Leitung bewegt werden. Vorzugsweise wird mit der Leitung mindestens ein der Ablagefläche zugewandter Unterseitenmagnet geführt, und die Ablagefläche weist mindestens einen Ablageflächenmagneten auf, der so angeordnet ist, dass er den Unterseitenmagneten bei dessen Annäherung abstößt. Im Bereich der Magnete schwebt die Leitung bzw. die sie umgebende Hülle über der Ablagefläche, was besonders dann vorteilhaft ist, wenn die Leitung durch die Ablegewanne gezogen wird. Eine vorteilhafte Weiterbildung sieht vor, dass mit der Leitung mindestens ein den Seitenführungen zugewandter Seitenmagnet geführt ist, und dass die Seitenführungen jeweils mindestens einen Seitenführungsmagneten aufweisen, der so angeordnet ist, dass er den Seitenmagneten bei dessen Annäherung abstößt. In diesem Fall ist auch ein Abrieb durch Entlangschleifen an den Seitenführungen zumindest im Bereich der Magnete unterbunden.

Zweckmäßig ist die Leitung in der Ablegewanne so umfaltbar, dass ein erster Abschnitt mit seiner der Ablagefläche zugewandten Unterseite über einer der Ablagefläche abgewandten Oberseite eines mit ihm durch einen gebogenen Abschnitt verbundenen zweiten Abschnitts ablegbar ist. Dies ermöglicht bei gleicher Länge der Leitung größere Verfahrwege. In diesem Fall wird bevorzugt, dass mit der Oberseite des zweiten Abschnitts sowie der Unterseite des ersten Abschnitts jeweils mindestens ein Oberseitenmagnet geführt ist, wobei ein Magnetpol des Oberseitenmagneten am ersten Abschnitt einem gleichnamigen Magnetpol des Oberseitenmagneten am zweiten Abschnitt zugewandt ist, so dass der erste Abschnitt zumindest über einen Teil seiner Länge über dem zweiten Abschnitt in der Schwebe haltbar ist. Dadurch wird alternativ oder ergänzend zu den oben genannten Maßnahmen auch ein Verschleiß durch Schleifen des ersten Abschnitts auf dem zweiten Abschnitt bzw. einer den ersten Abschnitt einschließenden Hülle auf einer den zweiten Abschnitt einschließenden Hülle vermieden. Eine frei schwebende Lagerung des zweiten Abschnitts ist dann nicht zwingend erforderlich, da dieser nur auf der Ablagefläche abgelegt und nicht über diese geschleift wird. Zweckmäßig sind entlang des ersten und des zweiten Abschnitts im Abstand zueinander mehrere Oberseitenmagnete so angeordnet, dass Magnetpolen entlang des ersten Abschnitts gleichnamige Magnetpole entlang des zweiten Abschnitts zugewandt sind. Der erste Abschnitt wird dadurch über einen Großteil seiner Länge, vorzugsweise über seine gesamte Länge, schwebend über dem zweiten Abschnitt gehalten und bewegt.

Entsprechend sind vorzugsweise entlang der Leitung im Abstand zueinander mehrere Unterseitenmagnete und an der Ablagefläche im Abstand zueinander mehrere Ablageflächenmagnete so angeordnet, dass Magnetpolen entlang der Leitung gleichnamige Magnetpole an der Ablagefläche zugewandt sind. Dadurch wird die Leitung bzw. die sie einschließende Hülle vollständig oder zumindest über einen Großteil ihrer Länge schwebend über der Ablagefläche gehalten. Zweckmäßig sind auch entlang der Seitenführungen im Abstand zueinander mehrere Seitenführungsmagnete und entlang der den Seitenführungen zugewandten Seiten der Leitung im Abstand zueinander mehrere Seitenmagnete so angeordnet, dass Magnetpolen der Seitenführungsmagnete gleichnamige Pole der Seitenmagnete zugewandt sind. Somit wird über einen Großteil der Länge oder die gesamte Länge der Leitung bzw. der sie einschließenden Hülle eine Berührung mit den Seitenführungen vermieden. Zweckmäßig sind die Seitenführungsmagnete an jeder Seitenführung in zwei im Abstand übereinander verlaufenden Reihen angeordnet. Auf diese Weise werden zwei übereinander angeordnete Abschnitte der Leitung bzw. der sie einschließenden Hülle im Abstand zu den Seitenführungen geführt.

Die Unterseitenmagnete, die Seitenmagnete und/oder die Oberseitenmagnete können an der Leitung direkt angeordnet sein. Es wird jedoch bevorzugt, dass die Leitung in einem Träger angeordnet ist, der die Unterseitenmagnete, die Seitenmagnete und/oder die Oberseitenmagnete trägt. Der Träger ist vorzugsweise eine die Leitung umschließende und diese schützende Hülle. Dabei können die Magnete an der Außenfläche des Trägers, innerhalb des Trägers oder in Aufnahmeöffnungen in der Außenfläche des Trägers angeordnet sein.

Der Träger kann eine Kunststoffmasse sein, in die mehrere Leitungen eingebettet sind. Dadurch wird ein ganzes Kabelpaket in der Ablegewanne geführt.

Eine besonders vorteilhafte Ausgestaltung der Erfindung sieht vor, dass der Träger eine Energieführungskette ist. Energieführungsketten, die in einer Ablegewanne geführt werden und eine oder mehrere Leitungen aufnehmen, sind beim Bewegen einem hohen Verschleiß ausgesetzt. Dies gilt zum einen für den Kontakt zwischen der Kette und der Ablagefläche. Mehr noch gilt es für den Kontakt der Seitenglieder der Kette mit den Seitenführungen der Ablegewanne, an denen diese beim ungenauen Ablegen der Kette entlanggleiten. Am größten ist der Verschleiß in den Bereichen der Kette, wo das Obertrum auf dem Untertrum abgelegt wird und beim Verfahren der Kette über dieses hinweggleitet bzw. an den Seitenführungen entlanggleitet. An diesen Stellen, an denen eine Relativbewegung von Bauteilen Reibung verursacht, ist die berührungslose Führung der Kette am vorteilhaftesten. Die Reibung an diesen Stellen wird durch Anbringen von Seitenführungsmagneten und/oder Ablageflächenmagneten in der Ablegewanne an den Seitenführungen bzw. an der Ablagefläche sowie von Unterseitenmagneten an der der Ablagefläche zugewandten Unterseite der Kette, von Oberseitenmagneten an der Oberseite des Untertrums und an der Unterseite des Obertrums und/oder von Seitenmagneten an den Seitenführungen zugewandten Seiten der Energieführungskette vermieden. Die zumindest teilweise berührungslose und damit reibungslose Führung der Kette hat den weiteren Vorteil, dass der Energieverbrauch beim Bewegen der Kette verringert wird. Desweiteren können höhere Beschleunigungen und Geschwindigkeiten erreicht werden, vergleichbar mit einer freitragenden Kette.

Dabei sind die Seitenmagnete zweckmäßig an den Seitengliedern der Kette angebracht. Die Unterseitenmagnete und die Oberseitenmagnete können wahlweise an den Seitengliedern oder an die Seitenglieder verbindenden Verbindungsstegen angeordnet sein. Zweckmäßig ist an jedem Kettenglied ein Paar Oberseitenmagnete symmetrisch zur Längsmittelebene angeordnet, die sich beidseitig in Längsrichtung des Kettenglieds erstrecken. Dabei wird bevorzugt, dass die Oberseitenmagnete in ihrer Längsrichtung verlaufende, von den Kettengliedern weg weisende Erhöhungen aufweisen. Vorteilhafterweise sind die Oberseitenmagnete aufeinanderfolgender Kettenglieder in unterschiedlichen Abständen zu deren Seiten angeordnet. Dabei wird besonders bevorzugt, dass bei jedem Kettenglied die Erhöhungen so angeordnet sind, wie bei dem n-ten darauffolgenden Kettenglied. n ist eine natürliche Zahl und vorzugsweise größer oder gleich 3. Dadurch ergibt sich eine Seitenführung des Obertrums über dem Untertrum, durch die bei kleineren Störeinflüssen das Obertrum über dem Untertrum gehalten wird und nicht zur Seite ausweicht. Die Seitenmagnete können wenigstens zum Teil durch Rollen ersetzt sein, die auf den Seitenführungen abrollen. Bei der Verwendung von Rollen können die Seitenführungsmagnete entfallen.

Eine vorteilhafte Weiterbildung der Erfindung sieht vor, dass die Ablegewanne eine Gleitschiene zum Ablegen des Obertrums der Energieführungskette aufweist, dass an der Gleitschiene mindestens ein Gleitschienenmagnet angeordnet ist, und dass an der der Gleitschiene zugewandten Unterseite des Obertrums mindestens ein Oberseitenmagnet so angeordnet ist, dass ein Magnetpol des Oberseitenmagneten einem gleichnamigen Magnetpol des Gleitschienenmagneten zugewandt ist. Vorzugsweise sind an der Energieführungskette im Abstand zueinander mehrere Oberseitenmagnete und an der Gleitschiene im Abstand zueinander mehrere Gleitschienenmagnete so angeordnet, dass Magnetpole der Oberseitenmagnete gleichnamigen Magnetpolen der Gleitschienenmagnete zugewandt sind. Das Obertrum kann dann schwebend auch über das Ende des Untertrums hinaus in der Ablegewanne bewegt werden. Die Oberseitenmagnete sind dabei zweckmäßig dieselben Magnete, die auch das Obertrum über dem Untertrum in der Schwebe halten.

Zweckmäßig ist die Ablegewanne aus einem nichtmagnetischen Material gefertigt. Dies kann beispielsweise Aluminium oder eine Aluminiumlegierung sein. Auch Kunststoff kommt in Betracht. Ein nichtmagnetisches Material hat keine störenden Einflüsse auf die an der Ablegewanne und der Leitung bzw. an deren Träger angebrachten Magnete. Die Seitenführungsmagnete bzw. die Ablegewannenmagnete können wahlweise an der Oberfläche der Ablegewanne oder in Aufnahmeöffnungen in der Ablegewanne eingesetzt sein.

Alle verwendeten Magnete sind zweckmäßig Permanentmagnete und/oder Elektromagnete.

Im Folgenden wird die Erfindung anhand eines in der Zeichnung schematisch dargestellten Ausführungsbeispiels näher erläutert. Es zeigen
- Fig. 1 bis Fig. 3: eine schematische Darstellung einer erfindungsgemäßen Vorrichtung gemäß eines ersten, eines zweiten und eines dritten Ausführungsbeispiels im Querschnitt;
- Fig. 4: eine schematische Darstellung einer erfindungsgemäßen Vorrichtung mit einer in einer Ablegewanne geführten Energieführungskette im Querschnitt;
- Fig. 5: einen weiteren Querschnitt durch die erfindungsgemäße Vorrichtung nach Fig. 4;
- Fig. 6 und 8: jeweils eine schematische Draufsicht auf ein Untertrum einer erfindungsgemäßen Energieführungskette;
- Fig. 7a, b, c: drei schematische Längsschnitte durch die Energieführungskette gemäß Fig. 6 mit über dem Untertrum schwebenden Obertrum;
- Fig. 9a und b: zwei schematische Längsschnitte durch die Energieführungskette gemäß Fig. 8 mit über dem Untertrum schwebenden Obertrum.

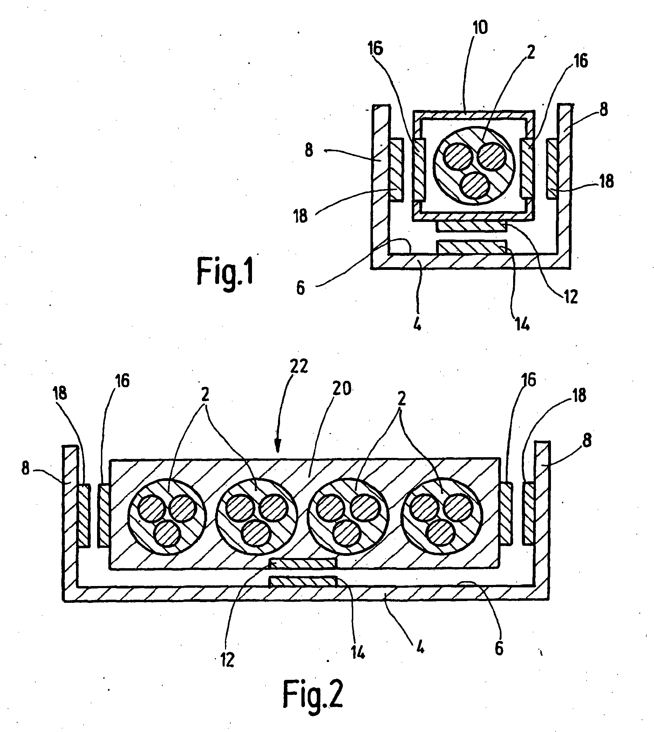

Gemäß einem ersten Ausführungsbeispiel (Fig. 1) ist ein dreiadriges Kabel 2 in einer Ablegewanne 4 aus Aluminium geführt, die eine Ablagefläche 6 und sich von der Ablagefläche 6 nach oben erstreckende Seitenführungen 8 aufweist. Das Kabel 2 ist in seiner Längsrichtung relativ zur Ablegewanne 4 beweglich. Es ist von einer Hülle 10 umschlossen, an deren der Ablagefläche 6 zugewandter Unterseite ein Unterseitenmagnet 12 angeordnet ist, der sich in Längsrichtung des Kabels 2 über einen Großteil der Unterseite der Hülle 10 erstreckt. Dem Unterseitenmagneten 12 zugewandt ist auf der Ablagefläche 6 ein Ablageflächenmagnet 14 angeordnet, der sich in Längsrichtung der Ablegewanne 4 über einen Großteil der Länge der Ablagefläche 6 erstreckt. Dabei ist ein Magnetpol des Unterseitenmagneten 12 einem gleichnamigen Magnetpol des Ablageflächenmagneten 14 zugewandt, so dass sich die Magnete 12, 14 bei gegenseitiger Annäherung abstoßen. Dadurch wird die Hülle 10 mit dem in ihr eingeschlossenen Kabel 2 schwebend über der Ablagefläche 6 gehalten. Entlang den den Seitenführungen 8 zugewandten Seiten des Kabels 2 ist in der Hülle 10 jeweils ein Seitenmagnet 16 angeordnet, der sich in Längsrichtung des Kabels 2 erstreckt. Den Seitenmagneten 16 zugewandt sind an den Seitenführungen 8 zwei sich in Längsrichtung der Ablegewanne 4 erstreckende Seitenführungsmagnete 18 so angebracht, dass ein Magnetpol eines Seitenmagneten 16 einem gleichnamigen Magnetpol des ihm zugeordneten Seitenführungsmagneten 18 zugewandt ist. Durch die Anordnung der Permanentmagnete 12, 14, 16, 18 erhält man eine berührungslose Führung der das Kabel 2 umschließenden Hülle 10 in der Ablegewanne 4.

Gemäß einem zweiten Ausführungsbeispiel (Fig. 2) sind vier dreiadrige Kabel 2 in eine Kunststoffmasse 20 eingebettet und bilden ein Kabelpaket 22, das in einer Ablegewanne 4 geführt und in seiner Längsrichtung relativ zu dieser beweglich ist. Die Ablegewanne 4 weist wiederum eine Ablagefläche 6 sowie von der Ablagefläche 6 nach oben weisende Seitenführungen 8 auf. Mit den Kabeln 2 sind an der Unterseite des Kabelpakets 22 in Längsrichtung im Abstand zueinander mehrere Unterseitenmagnete 12 angeordnet. An den den Seitenführungen 8 zugewandten Seiten des Kabelpakets 22 sind im Abstand zueinander mehrere in Längsrichtung im Abstand zueinander angeordnete Seitenmagnete 16 mit den Kabeln 2 geführt. Den Unterseitenmagneten 12 bzw. den Seitenmagneten 16 zugewandt sind an der Ablagefläche 6 bzw. an den Seitenführungen 8 im Abstand zueinander Ablageflächenmagnete 14 bzw. Seitenführungsmagnete 18 angeordnet. Dabei sind Magnetpole der Ablageflächenmagnete 14 gleichnamigen Magnetpolen der Unterseitenmagnete 12 und Magnetpole der Seitenführungsmagnete 18 gleichnamigen Magnetpolen der Seitenmagnete 16 zugewandt, so dass das Kabelpaket 22 berührungslos in der Ablegewanne 4 schwebt.

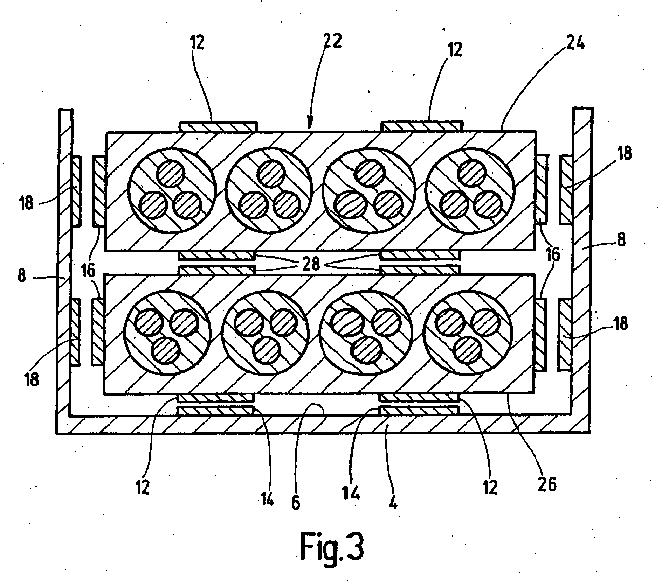

Das dritte Ausführungsbeispiel gemäß Fig. 3 ist eine Weiterentwicklung des zweiten Ausführungsbeispiels. Dabei ist das Kabelpaket 22 in der Ablegewanne 4 so umfaltbar, dass ein erster Abschnitt 24 mit seiner Unterseite über einer der Ablagefläche 6 abgewandten Oberseite eines mit ihm durch einen gebogenen Abschnitt verbundenen zweiten Abschnitts 26 ablegbar ist. Hier ist nur der erste Abschnitt 24 relativ zur Ablegewanne 4 beweglich, während der zweite Abschnitt 26 über der Ablagefläche 6 abgelegt bleibt. Zusätzlich zu zwei an seiner Unterseite angeordneten Reihen von Unterseitenmagneten 12 weist der zweite Abschnitt 26 an seiner Oberseite zwei Reihen von Oberseitenmagneten 28 auf. Diesen gegenüber sind zwei Reihen von Oberseitenmagneten 28 an der Unterseite des ersten Abschnitts 24 angeordnet. Dabei sind Magnetpole der Oberseitenmagnete 28 am ersten Abschnitt 24 gleichnamigen Magnetpolen der Oberseitenmagnete 28 am zweiten Abschnitt 26 zugeordnet, so dass der erste Abschnitt 24 schwebend über dem zweiten Abschnitt 26 gehalten wird. Die Seitenführungen 8 weisen zwei übereinander im Abstand angeordnete Reihen von Seitenführungsmagneten 18 auf, um eine berührungslose Seitenführung für beide Abschnitte 24, 26 des Kabelpakets 22 zu erzielen.

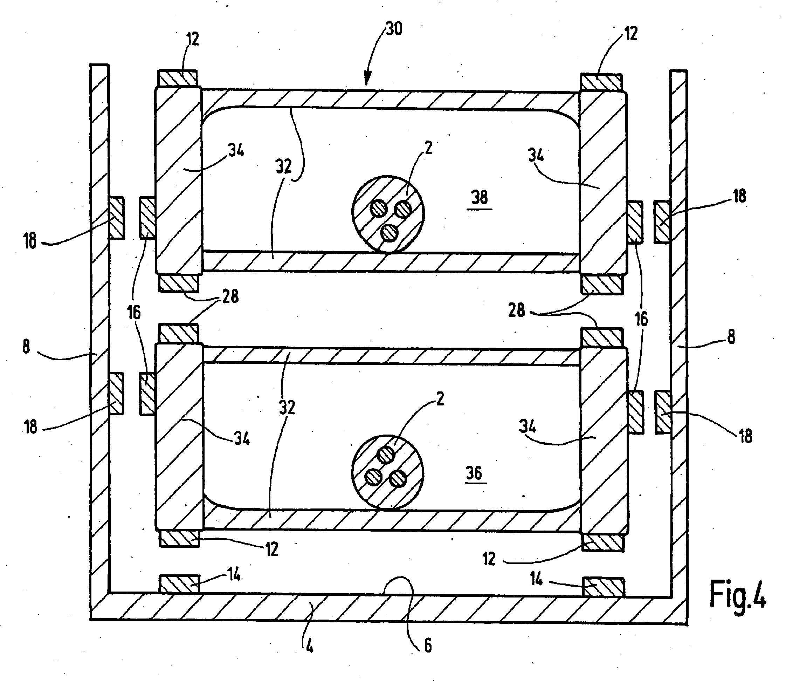

Bei dem in Fig. 4 dargestellten vierten Ausführungsbeispiel ist in einer eine Ablagefläche 6 und Seitenführungen 8 aufweisenden Ablegewanne 4 eine Energieführungskette 30 geführt. Die Energieführungskette 30 weist mehrere miteinander verbundene Kettenglieder auf, die jeweils zwei mit Verbindungsstegen 32 miteinander verbundene, zueinander parallele Seitenglieder 34 aufweisen. Über der Ablagefläche 6 ist ein Untertrum 36 der Kette 30 abgelegt. Über dem Untertrum 36 ist ein Obertrum 38 der Kette 30 abgelegt. In der Energieführungskette 30 ist beispielhaft für die in ihr führbaren verschiedenartigen Leitungen ein dreiadriges Kabel 2 abgebildet. Relativ zur Ablegewanne 4 wird nur das Obertrum 38 bewegt, während das Untertrum 36 über der Ablagefläche 6 abgelegt bleibt.

An der Oberseite des Untertrums 36 sowie an der der Oberseite des Untertrums 36 zugewandten Unterseite des Obertrums 38 sind an den Seitengliedern 34 jeweils Oberseitenmagnete 28 angebracht. Dabei sind Magnetpolen am Untertrum 36 gleichnamige Magnetpole am Obertrum 38 zugewandt, so dass sich die Magnete am Untertrum 36 und die Magnete am Obertrum 38 gegenseitig abstoßen. Die Oberseitenmagnete 28 sind über die gesamte Länge der Energieführungskette 30 angeordnet, so dass das Obertrum 38 über dem Untertrum 36 in der Schwebe gehalten wird und dieses nicht berührt. Auch das Untertrum 36 ist über der Ablagefläche 6 in der Schwebe gehalten. Zu diesem Zweck sind an der der Ablagefläche 6 zugewandten Unterseite des Untertrums 36 Unterseitenmagnete 12 und an der Ablagefläche 6 Ablageflächenmagnete 14 angeordnet. Diese sind im Abstand zueinander entlang der gesamten Länge der Energieführungskette 30 bzw. entlang der gesamten Länge der Ablagefläche 6 angebracht. Magnetpolen der Unterseitenmagnete 12 sind gleichnamige Magnetpole der Ablageflächenmagnete 14 zugewandt, so dass sich die Unterseitenmagnete 12 und die Ablageflächenmagnete 14 bei gegenseitiger Annäherung abstoßen. Wenn ein Abschnitt der Kette 30 von der Ablagefläche 6 abgehoben und durch Umfalten der Kette als Obertrum 38 über dem Untertrum 36 abgelegt wird, weisen die an ihm angeordneten Unterseitenmagnete 12 nach oben und befinden sich an einer Oberseite des Obertrums 38.

Auch im vierten Ausführungsbeispiel sind an den den Seitenführungen 8 zugewandten Seiten der Energieführungskette 30 Seitenmagnete 16 angeordnet, wobei Magnetpolen der Seitenmagnete 16 gleichnamige Magnetpole von an den Seitenführungen 8 angeordneten Seitenführungsmagneten 18 zugewandt sind. Die Seitenführungsmagnete 18 sind in zwei übereinander verlaufenden Reihen an den Seitenführungen 8 angebracht, so dass die Energieführungskette 30 berührungslos in der Ablegewanne 4 geführt ist.

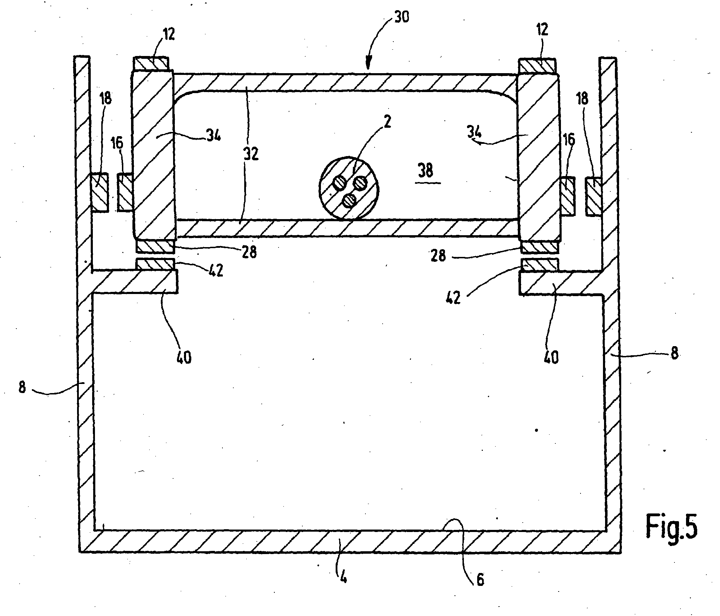

Wenn das Obertrum 38 über das Ende des Untertrums 36 hinaus noch weiter bewegt wird, kann es nicht mehr über diesem abgelegt werden. Zu diesem Zweck weist die Ablegewanne 4 gemäß Fig. 5 in einem Bereich, in dem in ihr kein Untertrum 36 abgelegt ist, an den Seitenführungen 8 angebrachte Gleitschienen 40 auf, über denen das Obertrum 38 abgelegt wird. An jeder der Gleitschienen 40 ist ein Gleitschienenmagnet 42 angebracht, der sich über die gesamte Länge der Gleitschiene 40 erstreckt. Dabei ist ein Magnetpol des Gleitschienenmagnets 42 jeweils gleichnamigen Magnetpolen der Oberseitenmagnete 28 an der Unterseite des Obertrums 38 zugewandt, so dass das Obertrum 38 auch über den Gleitschienen 40 schwebend in der Ablegewanne 4 gehalten wird.

In den vorstehend beschriebenen Ausführungsbeispielen sind die Hülle 10, das Kabelpaket 22 und die Energieführungskette 30 jeweils über die gesamte Länge berührungslos in der Ablegewanne 4 geführt. Es ist jedoch auch möglich, Teile der Hülle 10, des Kabelpakets 22 oder der Energieführungskette 30, die nur wenig oder mit geringen Geschwindigkeiten bewegt werden, nicht berührungslos zu führen. Insbesondere können, um einen einfacheren Aufbau zu erzielen, im dritten und vierten Ausführungsbeispiel die Unterseiten- und Ablageflächenmagnete 12, 14 bzw. die untere Reihe der Seitenführungsmagnete 18 weggelassen werden. Ebenso ist es möglich, beide Reihen der Seitenführungsmagnete 18 sowie die Seitenmagnete 16 wegzulassen.

Die Darstellung von dreiadrigen Kabeln 2 ist nur beispielhaft zu sehen. Die erfindungsgemäße Vorrichtung kann auch der Führung anderer Leitungen, insbesondere von Hydraulik- oder Druckluftschläuchen, dienen.

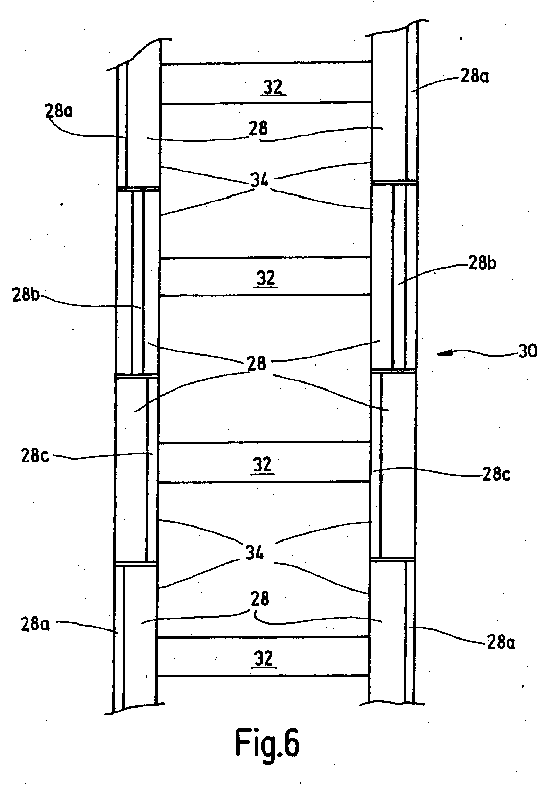

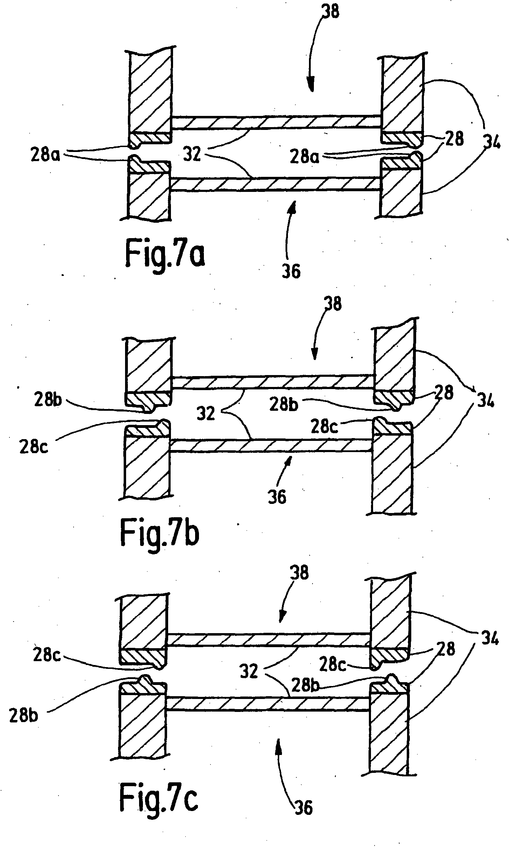

Die Figuren 6 und 7a, b, c zeigen ein weiteres Ausführungsbeispiel, bei dem das Obertrum 38 einer Energieführungskette schwebend über dem Untertrum 36 gehalten wird. Bei diesem Ausführungsbeispiel wird das Obertrum 38 auch bei kleineren Störeinflüssen über dem Untertrum 36 gehalten und weicht nicht oder nur unerheblich zur Seite aus. Dadurch kann prinzipiell auf eine Ablegewanne mit Seitenführungen verzichtet werden. Die Energieführungskette weist an der Oberseite ihres Untertrums 36, und damit auch an der Unterseite ihres Obertrums 38, an jedem Kettenglied ein Paar Oberseitenmagnete 28 auf, wobei Manetpole am Untertrum 36 stets gleichnamigen Magnetpolen am Obertrum 38 zugewandt sind. Diese sind an den durch Verbindungsstege 32 miteinander verbundenen Seitengliedern 34 angebracht und erstrecken sich in Längsrichtung des jeweiligen Kettenglieds. Sie sind symmetrisch zur Längsmittelebene der Energieführungskette angeordnet. Die Oberseitenmagnete 28 weisen in ihrer Längsrichtung verlaufende, von den Kettengliedern weg weisende Erhöhungen 28a, 28b, 28c auf. Diese sind bei aufeinanderfolgenden Kettengliedern in unterschiedlichen Abständen zu deren Seiten angeordnet. Im hier dargestellten Ausführungsbeispiel wiederholt sich die Anordnung der Erhöhungen bei jedem dritten Kettenglied.

Die Anordnung der Erhöhungen 28a, 28b, 28c bewirkt, dass das Obertrum 38 stabil ist gegen seitliche Auslenkungen bezüglich des Untertrums 36. Bei drei aufeinanderfolgenden Kettengliedpaaren von Ober- und Untertrum 36, 38 schwebt gemäß Fig. 7a bei einem ersten Kettengliedpaar ein Kettenglied mit den Erhöhungen 28a am Außenrand der Seitenglieder 34 über einem gleichartigen Kettenglied. Die waagerechten Komponenten der Abstoßungskräfte der Oberseitenmagnete 28 heben sich hierbei auf. Bei dem darauffolgenden Kettengliedpaar (Fig. 7b) schwebt ein Kettenglied des Obertrums 38 mit in der Mitte der Seitenglieder 34 angeordneten Erhöhungen 28b über einem Kettenglied des Untertrums 36 mit an der Innenseite der Seitenglieder 34 angeordneten Erhöhungen 28c. Beim darauffolgenden Kettengliedpaar (Fig. 7c) schwebt ein Kettenglied des Öbertrums 38 mit an der Innenseite der Seitenglieder 34 angeordneten Erhöhungen 28c über einem Kettenglied des Untertrums 36 mit in der Mitte der Seitenglieder 34 angeordneten Erhöhungen 28b. In den beiden letzteren Fällen bewirkt eine seitliche Auslenkung des Obertrums 38 über dem Untertrum 36 jeweils eine Annäherung einer Erhöhung 28b, 28c am Obertrum 38 an eine Erhöhung 28b, 28c am Untertrum 36, die einem Abgleiten des Obertrums 38 vom Untertrum 36 entgegenwirkt. Das Obertrum 38 befindet sich damit stets über etwa zwei Drittel seiner Länge in einer gegenüber seitlichen Auslenkungen stabilen Position über dem Untertrum 36.

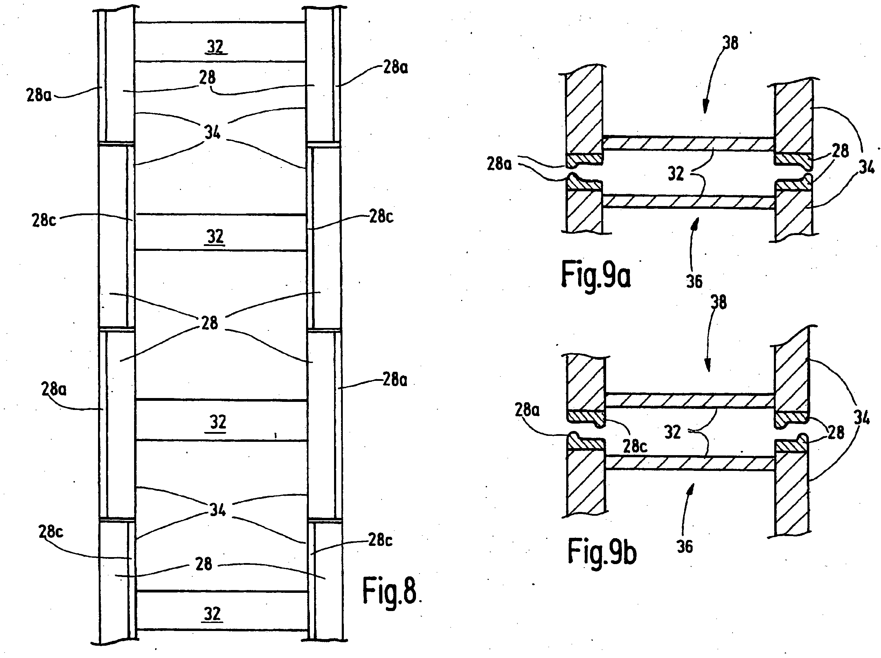

Es ist auch möglich, die Anordnung bei jedem n-ten Kettenglied mit n > 3 oder bei jedem zweiten Kettenglied zu wiederholen, wie in Fig. 8 und Fig. 9a, b gezeigt. Wenn ein Kettenglied des Obertrums 38 über einem Kettenglied des Untertrums 36 mit gleicher Anordnung der Erhöhungen 28a schwebt (Fig. 9a), heben sich die waagrechten Komponenten der Magnetkräfte auf. Wenn ein Kettenglied des Obertrums 38 über einem Kettenglied des Untertrums 36 mit komplementärer Anordnung der Erhöhungen 28a, 28b schwebt (Fig. 9b), heben sich die waagrechten Komponenten der Magnetkräfte ebenfalls auf und bewirken zudem einen selbsttätigen Ausgleich kleinerer seitlicher Auslenkungen des Obertrums 38 gegenüber dem Untertrum 36.

Zusammenfassend ist folgendes festzuhalten:

Die Erfindung betrifft eine Vorrichtung zur Führung mindestens einer Leitung 2, insbesondere einer elektrischen Leitung. Die Vorrichtung weist eine Ablegewanne 4 zum Ablegen der Leitung 2 auf, wobei die Ablegewanne 4 eine Ablagefläche 6 und Seitenführungen 8 aufweist. Erfindungsgemäß ist vorgesehen, dass mit der Leitung 2 mindestens ein Magnet 12, 16, 28 geführt ist, durch den sie zumindest über einen Teil ihrer Länge in der Ablegewanne 4 in der Schwebe haltbar ist.

## Patentansprüche

1. Ablegevorrichtung, umfassend mindestens eine Leitung (2), insbesondere eine elektrische Leitung, und eine Ablegewanne (4) zum Ablegen der Leitung (2), wobei die Ablegewanne (4) eine Ablagefläche (6) und Seitenführungen (8) aufweist, **dadurch gekennzeichnet, dass** mit der Leitung (2) mindestens ein Magnet (12, 16, 28) geführt ist, der an oder unterhalb einer nach unten weisenden Seite der Leitung (2) angeordnet ist und durch den sie zumindest über einen Teil ihrer Länge in der Ablegewanne (4) in der Schwebe haltbar ist.

2. Ablegevorrichtung nach Anspruch 1, **dadurch gekennzeichnet, dass** mit der Leitung (2) mindestens ein der Ablagefläche (6) zugewandter Unterseitenmagnet (12) geführt ist, und dass die Ablagefläche (6) mindestens einen Ablageflächenmagnet (14) aufweist, der so angeordnet ist, dass er den Unterseitenmagnet (12) bei dessen Annäherung abstößt.

3. Ablegevorrichtung nach Anspruch 1 oder 2, **dadurch gekennzeichnet, dass** mit der Leitung (2) mindestens ein den Seitenführungen (8) zugewandter Seitenmagnet (16) geführt ist und dass die Seitenführungen (8) jeweils mindestens einen Seitenführungsmagneten (18) aufweisen, der so angeordnet ist, dass er den Seitenmagnete (16) bei dessen Annäherung abstößt.

4. Ablegevorrichtung nach einem der vorangehenden Ansprüche, **dadurch gekennzeichnet, dass** die Leitung (2) in der Ablegewanne (4) so umfaltbar ist, dass ein erster Abschnitt (24) mit seiner der Ablagefläche (6) zugewandten Unterseite über einer der Ablagefläche (6) abgewandten Oberseite eines mit ihm durch einen gebogenen Abschnitt verbundenen zweiten Abschnitts (26) ablegbar ist.

5. Ablegevorrichtung nach Anspruch 4, **dadurch gekennzeichnet, dass** mit der Oberseite des zweiten Abschnitts (26) sowie mit der Unterseite des ersten Abschnitts (24) jeweils mindestens ein Oberseitenmagnet (28) geführt ist, wobei ein Magnetpol des Oberseitenmagnets (28) am ersten Abschnitt (24) einem gleichnamigen Magnetpol des Oberseitenmagnets (28) am zweiten Abschnitt (26) zugewandt ist, so dass der erste Abschnitt (24) zumindest über einen Teil seiner Länge über dem zweiten Abschnitt (26) in der Schwebe haltbar ist.

6. Ablegevorrichtung nach Anspruch 5, **dadurch gekennzeichnet, dass** entlang des ersten und des zweiten Abschnitts (24, 26) im Abstand zueinander mehrere Oberseitenmagnete (28) so angeordnet sind, dass Magnetpolen entlang des ersten Abschnitts (24) gleichnamige Magnetpole entlang des zweiten Abschnitts (26) zugewandt sind.

7. Ablegevorrichtung nach einem der Ansprüche 2 bis 6, **dadurch gekennzeichnet, dass** entlang der Leitung (2) im Abstand zueinander mehrere Unterseitenmagnete (12) und an der Ablagefläche (6) im Abstand zueinander mehrere Ablageflächenmagnete (14) so angeordnet sind, dass Magnetpolen entlang der Leitung (2) gleichnamige Magnetpole an der Ablagefläche (6) zugewandt sind.

8. Ablegevorrichtung nach einem der Ansprüche 3 bis 7, **dadurch gekennzeichnet, dass** entlang der Seitenführungen (8) im Abstand zueinander mehrere Seitenführungsmagnete (18) und entlang der den Seitenführungen (8) zugewandten Seiten der Leitung (2) im Abstand zueinander mehrere Seitenmagnete (16) so angeordnet sind, dass Magnetpolen der Seitenführungsmagnete (18) gleichnamige Magnetpole der Seitenmagnete (16) zugewandt sind.

9. Ablegevorrichtung nach Anspruch 8, **dadurch gekennzeichnet, dass** die Seitenführungsmagnete (18) an jeder Seitenführung (8) in zwei im Abstand übereinander verlaufenden Reihen angeordnet sind.

10. Ablegevorrichtung nach einem der vorangehenden Ansprüche, **dadurch gekennzeichnet, dass** die Unterseitenmagnete (12) und/oder die Seitenmagnete (16) und/oder die Oberseitenmagnete (28) an der Leitung (2) angeordnet sind.

11. Ablegevorrichtung nach einem der Ansprüche 1 bis 9, **dadurch gekennzeichnet, dass** die Leitung (2) in einem Träger (10, 20, 30) angeordnet ist, der die Unterseitenmagnete (12) und/oder die Seitenmagnete (16) und/oder die Oberseitenmagnete (28) trägt.

12. Ablegevorrichtung nach Anspruch 11, **dadurch gekennzeichnet, dass** die Unterseitenmagnete (12) und/oder die Seitenmagnete (16) und/oder die Oberseitenmagnete (28) an der Außenfläche des Trägers (10, 20, 30) angeordnet sind.

13. Ablegevorrichtung nach Anspruch 11, **dadurch gekennzeichnet, dass** die Unterseitenmagnete (12) und/oder die Seitenmagnete (16) und/oder die Oberseitenmagnete (28) im Träger (10, 20, 30) angeordnet sind.

14. Ablegevorrichtung nach Anspruch 11, **dadurch gekennzeichnet, dass** die Unterseitenmagnete (12) und/oder die Seitenmagnete (16) und/oder die Oberseitenmagnete (28) in Aufnahmeöffnungen in der Außenfläche des Trägers (10, 20, 30) angeordnet sind.

15. Ablegevorrichtung nach einem der Ansprüche 11 bis 14, **dadurch gekennzeichnet, dass** der Träger eine die Leitung (2) umschließende Hülle (10) ist.

16. Ablegevorrichtung nach einem der Ansprüche 11 bis 14, **dadurch gekennzeichnet, dass** der Träger eine Kunststoffmasse (20) ist, in die mehrere Leitungen (2) eingebettet sind.

17. Ablegevorrichtung nach einem der Ansprüche 11 bis 14, **dadurch gekennzeichnet, dass** der Träger eine Energieführungskette (30) ist.

18. Ablegevorrichtung, umfassend eine eine oder mehrere Leitungen aufnehmende Energieführungskette und eine Ablegewanne (4) zum Ablegen der Energieführungskette (30), wobei die Ablegewanne (4) eine Ablagefläche (6) und Seitenführungen (8) aufweist, **dadurch gekennzeichnet, dass** die Energieführungskette (30) mindestens einen Magneten (12, 16, 28) aufweist, durch den sie zumindest über einen Teil ihrer Länge frei schwebend in der Ablegewanne (4) haltbar ist.

19. Ablegevorrichtung nach Anspruch 18, **dadurch gekennzeichnet, dass** an der Oberseite eines Untertrums (36) der Energieführungskette (30) und an der Unterseite eines Obertrums (38) der Energieführungskette (30) jeweils mindestens ein Oberseitenmagnet (28) so angeordnet ist, dass ein Magnetpol am Obertrum (38) einem gleichnamigen Magnetpol am Untertrum (36) zugewandt ist.

20. Ablegevorrichtung nach Anspruch 19, **dadurch gekennzeichnet, dass** an der Unterseite des Obertrums (38) und an der Oberseite des Untertrums (36) im Abstand zueinander mehrere Oberseitenmagnete (28) so angeordnet sind, dass Magnetpolen am Obertrum (38) gleichnamige Magnetpole am Untertrum (36) zugewandt sind.

21. Ablegevorrichtung nach einem der Ansprüche 18 bis 20, **dadurch gekennzeichnet, dass** die Energieführungskette (30) an ihrer der Ablagefläche (6) zugewandten Unterseite mindestens einen Unterseitenmagneten (12) aufweist und dass die Ablagefläche (6) mindestens einen Ablageflächenmagneten (14) aufweist, der so angeordnet ist, dass er den Unterseitenmagnet (12) bei dessen Annäherung abstößt.

22. Ablegevorrichtung nach Anspruch 21, **dadurch gekennzeichnet, dass** entlang der Unterseite im Abstand zueinander mehrere Unterseitenmagnete (12) und an der Ablagefläche (6) im Abstand zueinander mehrere Ablageflächenmagnete (14) so angeordnet sind, dass Magnetpolen an der Unterseite gleichnamige Magnetpole an der Ablagefläche (6) zugewandt sind.

23. Ablegevorrichtung nach einem der Ansprüche 18 bis 22, **dadurch gekennzeichnet, dass** die Energieführungskette (30) an ihren den Seitenführungen (8) zugewandten Seiten mindestens einen Seitenmagneten (16) aufweist und dass die Seitenführungen (8) jeweils mindestens einen Seitenführungsmagneten (18) aufweisen, der so angeordnet ist, dass ein Magnetpol des Seitenführungsmagneten (18) einem gleichnamigen Magnetpol des Seitenmagneten (16) zugewandt ist

24. Ablegevorrichtung nach Anspruch 23, **dadurch gekennzeichnet, dass** entlang der Energieführungskette (30) mehrere Seitenmagnete (16) und entlang der Seitenführungen (8) mehrere Seitenführungsmagnete (18) jeweils im Abstand zueinander so angeordnet sind, dass Magnetpolen der Seitenmagnete (16) gleichnamige Magnetpole der Seitenführungsmagnete (18) zugewandt sind.

25. Ablegevorrichtung nach Anspruch 24, **dadurch gekennzeichnet, dass** die Seitenführungsmagnete (18) in zwei im Abstand übereinander verlaufenden Reihen angeordnet sind.

26. Ablegevorrichtung nach einem der Ansprüche 18 bis 25, **dadurch gekennzeichnet, dass** die Ablegewanne (4) eine Gleitschiene (40) zum Ablegen des Obertrums (38) aufweist, dass an der Gleitschiene (40) mindestens ein Gleitschienenmagnet (42) angeordnet ist, und dass an der der Gleitschiene (40) zugewandten Unterseite des Obertrums (38) mindestens ein Oberseitenmagnet (28) so angeordnet ist, dass ein Magnetpol des Oberseitenmagnets (28) einem gleichnamigen Magnetpol des Gleitschlenenmagnets (42) zugewandt ist.

27. Ablegevorrichtung nach Anspruch 26, **dadurch gekennzeichnet, dass** an der Energieführungskette (30) im Abstand zueinander mehrere Oberseitenmagnete (28) und an der Gleitschiene (40) im Abstand zueinander mehrere Gleitschienenmagnete (42) so angeordnet sind, dass Magnetpole der Oberseitenmagnete (28) gleichnamigen Magnetpolen der Gleitschienenmagnete (42) zugewandt sind.

28. Ablegevorrichtung nach einem der vorangehenden Ansprüche, **dadurch gekennzeichnet, dass** die Ablegewanne (4) aus einem nichtmagnetischen Material, vorzugsweise aus Kunststoff, Aluminium oder einer Aluminiumlegierung, besteht.

29. Ablegevorrichtung nach einem der vorangehenden Ansprüche, **dadurch gekennzeichnet, dass** die Seitenführungsmagnete (18) und/oder die Ablageflächenmagnete (14) und/oder die Gleitschienenmagnete (42) an der Oberfläche der Ablegewanne (4) angeordnet sind.

30. Ablegevorrichtung nach einem der vorangehenden Ansprüche, **dadurch gekennzeichnet, dass** die Seitenführungsmagnete (18) und/oder die Ablageflächenmagnete (14) und/oder die Gleitschienenmagnete (42) in Aufnahmeöffnungen in der Ablegewanne (4) eingesetzt sind.

31. Ablegevorrichtung nach einem der vorangehenden Ansprüche, **dadurch gekennzeichnet, dass** die Seitenführungsmagnete (18) und/oder die Ablageflächenmagnete (14) und/oder die Seitenmagnete (16) und/oder die Unterseitenmagnete (12) und/oder die Oberseitenmagnete (28) und/oder die Gleitschienenmagnete (42) Permanentmagnete sind.

32. Ablegevorrichtung nach einem der vorangehenden Ansprüche, **dadurch gekennzeichnet, dass** die Seitenführungsmagnete (18) und/oder die Ablageflächenmagnete (14) und/oder die Seitenmagnete (16) und/oder die Unterseitenmagnete (12) und/oder die Oberseitenmagnete (28) und/oder die Gleitschienenmagnete (42) Elektromagnete sind.

33. Energieführungskette zur Verwendung in einer Ablegevorrichtung nach einem der Ansprüche 18 bis 32, **gekennzeichnet durch** mindestens einen Oberseitenmagneten (28) an der Oberseite ihres Untertrums (36) und mindestens einen Oberseitenmagneten (28) an der Unterseite ihres Obertrums (38), wobei ein Magnetpol am Untertrum (36) einem gleichnamigen Magnetpol am Obertrum (38) zugewandt ist.

34. Energieführungskette nach Anspruch 33, **dadurch gekennzeichnet, dass** an der Oberseite des Untertrums (36) und an der Unterseite des Obertrums (38) jeweils mehrere Oberseitenmagnete (28) so angeordnet sind, dass Magnetpolen am Obertrum (38) gleichnamige Magnetpole am Untertrum (36) zugewandt sind.

35. Energieführungskette zur Verwendung in einer Ablegevorrichtung nach einem der Ansprüche 18 bis 32, **gekennzeichnet durch** mindestens einen Unterseitenmagneten (12) an ihrer Unterseite und mindestens einen Seitenmagneten (16) an den Seitenflächen der Kettenglieder.

36. Energieführungskette nach Anspruch 35, **dadurch gekennzeichnet, dass** die Seitenmagnete (16) an ihren Seitengliedern (34) angeordnet sind.

37. Energieführungskette nach einem der Ansprüche 33 bis 36, **dadurch gekennzeichnet, dass** die Unterseitenmagnete (12) und/oder die Oberseitenmagnete (28) an die Seitenglieder (34) verbindenden Verbindungsstegen (32) angeordnet sind.

38. Energieführungskette nach einem der Ansprüche 33 bis 36, **dadurch gekennzeichnet, dass** die Unterseitenmagnete (12) und/oder die Oberseitenmagnete (28) an den Seitengliedern (34) der Energieführungskette (30) angeordnet sind.

39. Energieführungskette nach einem der Ansprüche 33 bis 38, **dadurch gekennzeichnet, dass** an jedem Kettenglied ein Paar sich in Längsrichtung des Kettenglieds erstreckende Oberseitenmagnete (28) symmetrisch zur Längsmittelebene angeordnet ist.

40. Energieführungskette nach Anspruch 39, **dadurch gekennzeichnet, dass** die Oberseitenmagnete (28) in ihrer Längsrichtung verlaufende, von den Kettengliedern weg weisende Erhöhungen (28a, 28b, 28c) aufweisen.

41. Energieführungskette nach Anspruch 40, **dadurch gekennzeichnet, dass** die Erhöhungen (28a, 28b, 28c) der Oberseitenmagnete (28) aufeinanderfolgender Kettenglieder in unterschiedlichen Abständen zu deren Seiten angeordnet sind.

42. Energieführungskette nach Anspruch 41, **dadurch gekennzeichnet, dass** bei jedem Kettenglied die Erhöhungen (28a, 28b, 28c) so angeordnet sind wie bei dem n-ten darauffolgenden Kettenglied, wobei n eine natürlich Zahl ist.

43. Energieführungskette nach Anspruch 42, **dadurch gekennzeichnet, dass** n größer oder gleich 3 ist.

44. Energieführungskette nach einem der Ansprüche 33 bis 43, **dadurch gekennzeichnet, dass** sie an ihren den Seitenführungen (8) einer Ablegewanne (4) zugewandten Seiten Rollen zum Abrollen auf den Seitenführungen (8) aufweist.

## Claims

1. Distribution device, comprising at least one line (2), in particular an electric line, and a distribution trough (4) for depositing the line (2), wherein the distribution trough (4) has a distribution face (6) and side guides (8), **characterised in that** at least one magnet (12, 16, 28) is guided with the line (2), which magnet is arranged on or underneath a side of the line (2) pointing downwards and by means of which magnet, the line can be held suspended at least over a part of its length, in the distribution trough (4).

2. Distribution device according to claim 1, **characterised in that** at least one lower side magnet (12) facing the distribution face (6) is guided with the line (2), and **in that** the distribution face (6) has at least one distribution face magnet (14), which is arranged in such a way that it repels the lower side magnet (12) when it approaches.

3. Distribution device according to claim 1 or 2, **characterised in that** at least one side magnet (16) facing the side guides (8) is guided with the line (2) and **in that** the side guides (8) in each case have at least one side guidance magnet (18), which is arranged in such a way that it repels the side magnet (16) when it approaches.

4. Distribution device according to any one of the preceding claims, **characterised in that** the line (2) can be folded in the distribution trough (4) in such a way that a first portion (24) can be deposited with its lower side facing the distribution face (6) over an upper side pointing away from the distribution face (6) of a second portion (26) connected with it by a bent portion.

5. Distribution device according to claim 4, **characterised in that** at least one upper side magnet (28), in each case, is guided with the upper side of the second portion (26) and with the lower side of the first portion (24), a magnet pole of the upper side magnet (28) on the first portion (24) facing a magnet pole of the same polarity of the upper side magnet (28) on the second portion (26), so the first portion (24) can be held suspended, at least over a part of its length, over the second portion (26).

6. Distribution device according to claim 5, **characterised in that** along the first and second portion (24, 26), at a spacing apart from one another, a plurality of upper side magnets (28) is arranged in such a way that magnet poles with the same polarity along the second portion (26) face magnet poles along the first portion (24).

7. Distribution device according to any one of claims 2 to 6, **characterised in that** a plurality of lower side magnets (12) is arranged along the line (2) at a spacing apart from one another and a plurality of distribution face magnets (14) is arranged on the distribution face (6) at a spacing apart from one another in such a way that magnet poles of the same polarity on the distribution face (6) face magnet poles along the line (2).

8. Distribution device according to any one of claims 3 to 7, **characterised in that** a plurality of side guidance magnets (18) is arranged along the side guides (8) at a spacing apart from one another and a plurality of side magnets (16) is arranged along the side of the line (2) facing the side guides (8) at a spacing apart from one another in such a way that magnet poles of the same polarity of the side magnets (16) face magnet poles of the side guidance magnets (18).

9. Distribution device according to claim 8, **characterised in that** the side guidance magnets (18) on each side guide (8) are arranged in two rows running at a spacing above one another.

10. Distribution device according to any one of the preceding claims, **characterised in that** the lower side magnets (12) and/or the side magnets (16) and/or the upper side magnets (28) are arranged on the line (2).

11. Distribution device according to any one of claims 1 to 9, **characterised in that** the line (2) is arranged in a carrier (10, 20, 30) which carries the lower side magnets (12) and/or the side magnets (16) and/or the upper side magnets (28).

12. Distribution device according to claim 11, **characterised in that** the lower side magnets (12) and/or the side magnets (16) and/or the upper side magnets (28) are arranged on the outer face of the carrier (10, 20, 30).

13. Distribution device according to claim 11, **characterised in that** the lower side magnets (12) and/or the side magnets (16) and/or the upper side magnets (28) are arranged in the carrier (10, 20, 30).

14. Distribution device according to claim 11, **characterised in that** the lower side magnets (12) and/or the side magnets (16) and/or the upper side magnets (28) are arranged in receiving openings in the outer face of the carrier (10, 20, 30).

15. Distribution device according to any one of claims 11 to 14, **characterised in that** the carrier is a casing (10) surrounding the line (2).

16. Distribution device according to any one of claims 11 to 14, **characterised in that** the carrier is plastics material mass (20), in which a plurality of lines (2) is embedded.

17. Distribution device according to any one of claims 11 to 14, **characterised in that** the carrier is a power guiding chain (30).

18. Distribution device, comprising a power guiding chain receiving one or more lines and a distribution trough (4) for depositing the power guiding chain (30), the distribution trough (4) having a distribution face (6) and side guides (8), **characterised in that** the power guiding chain (30) has at least one magnet (12, 16, 28), by means of which, at least over a part of its length, it can be held freely suspended in the distribution trough (4).

19. Distribution device according to claim 18, **characterised in that** at least one upper side magnet (28), in each case, is arranged on the upper side of a lower strand (36) of the power guiding chain (30) and on the lower side of an upper strand (38) of the power guiding chain (30), in such a way that a magnet pole on the upper strand (38) faces a magnet pole of the same polarity on the lower strand (36).

20. Distribution device according to claim 19, **characterised in that** a plurality of upper side magnets (28) is arranged on the lower side of the upper strand (38) and on the upper side of the lower strand (36) at a spacing apart from one another in such a way that magnet poles of the same polarity on the lower strand (36) face magnet poles on the upper strand (38).

21. Distribution device according to any one of claims 18 to 20, **characterised in that** the power guiding chain (30) on its lower side facing the distribution face (6) has at least one lower side magnet (12) and **in that** the distribution face (6) has at least one distribution face magnet (14) which is arranged in such a way that it repels the lower side magnet (12) when it approaches.

22. Distribution device according to claim 21, **characterised in that** a plurality of lower side magnets (12) is arranged along the lower side at a spacing apart from one another and a plurality of distribution face magnets (14) is arranged on the distribution face (6) at a spacing apart from one another in such a way that magnet poles of the same polarity on the distribution face (6) face magnet poles on the lower side.

23. Distribution device according to any one of claims 18 to 22, **characterised in that** the power guiding chain (30), at its side facing the side guides (8), has at least one side magnet (16) and **in that** the side guides (8), in each case, have at least one side guidance magnet (18), which is arranged in such a way that a magnet pole of the side guidance magnet (18) faces a magnet pole of the same polarity of the side magnet (16).

24. Distribution device according to claim 23, **characterised in that** a plurality of side magnets (16) is arranged along the power guiding chain (30) and a plurality of side guidance magnets (18) is arranged along the side guides (8) at a spacing apart from one another in each case, in such a way that magnet poles of the same polarity of the side guidance magnets (18) face magnet poles of the side magnets (16).

25. Distribution device according to claim 24, **characterised in that** the side guidance magnets (18) are arranged in two rows running at a spacing above one another.

26. Distribution device according to any one of claims 18 to 25, **characterised in that** the distribution trough (4) has a sliding rail (40) for depositing the upper strand (38), **in that** at least one sliding rail magnet (42) is arranged on the sliding rail (40) and **in that** at least one upper side magnet (28) is arranged on the lower side of the upper strand (38) facing the sliding rail (40) in such a way that a magnet pole of the upper side magnet (28) faces a magnet pole of the same polarity of the sliding rail magnet (42).

27. Distribution device according to claim 26, **characterised in that** a plurality of upper side magnets (28) is arranged on the power guiding chain (30) at a spacing apart from one another and a plurality of sliding rail magnets (42) is arranged on the sliding rail (40) at a spacing apart from one another in such a way that magnet poles of the upper side magnets (28) face magnets poles of the same polarity of the sliding rail magnets (42).

28. Distribution device according to any one of the preceding claims, **characterised in that** the distribution trough (4) consists of non-magnetic material, preferably of plastics material, aluminium or an aluminium alloy.

29. Distribution device according to any one of the preceding claims, **characterised in that** the side guidance magnets (18) and/or the distribution face magnets (14) and/or the sliding rail magnets (42) are arranged on the surface of the distribution trough (4).

30. Distribution device according to any one of the preceding claims, **characterised in that** the side guidance magnets (18) and/or the distribution face magnets (14) and/or the sliding rail magnets (42) are inserted in receiving openings in the distribution trough (4).

31. Distribution device according to any one of the preceding claims, **characterised in that** the side guidance magnets (18) and/or the distribution face magnets (14) and/or the side magnets (16) and/or the lower side magnets (12) and/or the upper side magnets (28) and/or the sliding rail magnets (42) are permanent magnets.

32. Distribution device according to any one of the preceding claims, **characterised in that** the side guidance magnets (18) and/or the distribution face magnets (14) and/or the side magnets (16) and/or the lower side magnets (12) and/or the upper side magnets (28) and/or the sliding rail magnets (42) are electromagnets.

33. Power guiding chain for use in a distribution device according to any one of claims 18 to 32, **characterised by** at least one upper side magnet (28) on the upper side of its lower strand (36) and at least one upper side magnet (28) on the lower side of its upper strand (38), a magnet pole on the lower strand (36) facing a magnet pole of the same polarity on the upper strand (38).

34. Power guiding chain according to claim 33, **characterised in that** a plurality of upper side magnets (28), in each case, is arranged on the upper side of the lower strand (36) and on the lower side of the upper strand (38) in such a way that magnet poles of the same polarity on the lower strand (36) face magnet poles on the upper strand (38).

35. Power guiding chain for use in a distribution device according to any one of claims 18 to 32, **characterised by** at least one lower side magnet (12) on its lower side and at least one side magnet (16) on the side faces of the chain members.

36. Power guiding chain according to claim 35, **characterised in that** the side magnets (16) are arranged on side members (34) thereof.

37. Power guiding chain according to any one of claims 33 to 36, **characterised in that** the lower side magnets (12) and/or the upper side magnets (28) are arranged on connecting webs (32) connecting the side members (34).

38. Power guiding chain according to any one of claims 33 to 36, **characterised in that** the lower side magnets (12) and/or the upper side magnets (28) are arranged on the side members (34) of the power guiding chain (30).

39. Power guiding chain according to any one of claims 33 to 38, **characterised in that** a pair of upper side magnets (28) extending in the longitudinal direction of the chain member is arranged symmetrically to the longitudinal central plane on each chain member.

40. Power guiding chain according to claim 39, **characterised in that** the upper side magnets (28) have elevations (28a, 28b, 28c) running in their longitudinal direction and pointing away from the chain members.

41. Power guiding chain according to claim 40, **characterised in that** the elevations (28a, 28b, 28c) of the upper side magnets (28) of successive chain members are arranged at different spacings with respect to the sides thereof.

42. Power guiding chain according to claim 41, **characterised in that**, in each chain member, the elevations (28a, 28b, 28c) are arranged as in the n-th chain member following thereafter, n being a natural number.

43. Power guiding chain according to claim 42, **characterised in that** n is greater than or equal to 3.

44. Power guiding chain according to any one of claims 33 to 43, **characterised in that** it has, on its sides facing the side guides (8) of a distribution trough (4), rollers for rolling on the side guides (8).

## Revendications

1. Dispositif de distribution comprenant au moins une ligne (2), en particulier une ligne électrique, et un bac de distribution (4) pour stocker la ligne (2), le bac de distribution (4) présentant une surface de réception (6) et des guides latéraux (8), **caractérisé par le fait qu'**au moins un aimant (12, 16, 28) est guidé avec la ligne (2), qui est disposé sur ou sous un côté de la ligne (2) dirigé vers le bas et au moyen duquel elle peut être maintenue en suspension dans le bac de distribution 4 au moins sur une partie de sa longueur.

2. Dispositif de distribution selon la revendication 1, **caractérisé par le fait qu'**au moins un aimant de face inférieure (12) tourné vers la surface de réception (6) est guidé avec la ligne (2), et que la surface de réception (6) présente au moins un aimant de surface de réception (14) qui est disposé de façon à repousser l'aimant de face inférieure (12) lors de son rapprochement.

3. Dispositif de distribution selon la revendication 1 ou 2, **caractérisé par le fait qu'**au moins un aimant latéral (16) tourné vers les guides latéraux (8) est guidé avec la ligne (2) et que les guides latéraux (8) présentent chacun au moins un aimant de guide latéral (18) qui est disposé de façon à repousser l'aimant latéral (16) lors de son rapprochement.

4. Dispositif de distribution selon l'une des revendications précédentes, **caractérisé par le fait que** la ligne (2) peut être repliée dans le bac de distribution (4) de façon qu'une première section (24) puisse être déposée avec sa face inférieure tournée vers la surface de réception (6) au-dessus d'une face supérieure opposée à la surface de réception (6) d'une deuxième section (26) reliée à elle par une section courbe.

5. Dispositif de distribution selon la revendication 4, **caractérisé par le fait qu'**au moins chaque fois un aimant de face supérieure (28) est guidé avec la face supérieure de la deuxième section (26) ainsi qu'avec la face inférieure de la première section (24), un pôle magnétique de l'aimant de face supérieure (28) sur la première section (24) étant tourné vers un pôle magnétique de même nom de l'aimant de face supérieure (28) sur la deuxième section (26) de façon que la première section (24) puisse être maintenue en suspension au-dessus de la deuxième section (26) au moins sur une partie de sa longueur.

6. Dispositif de distribution selon la revendication 5, **caractérisé par le fait que** plusieurs aimants de face supérieure (28) sont disposés le long de la première et de la deuxième section (24, 26) à distance les uns des autres de façon que des pôles magnétiques le long de la première section (24) soient tournés vers des pôles magnétiques de même nom le long de la deuxième section (26).

7. Dispositif de distribution selon l'une des revendications 2 à 6, **caractérisé par le fait que** plusieurs aimants de face inférieure (12) sont disposés le long de la ligne (2) à distance les uns des autres et plusieurs aimants de surface de réception (14) disposés sur la surface de réception (6) à distance les uns des autres de façon que des pôles magnétiques le long de la ligne (2) soient tournés vers des pôles magnétiques de même nom sur la surface de réception (6).

8. Dispositif de distribution selon l'une des revendications 3 à 7, **caractérisé par le fait que** plusieurs aimants de guide latéral (18) sont disposés le long des guides latéraux (4) à distance les uns des autres et plusieurs aimants latéraux (16) disposés le long des côtés tournés vers les guides latéraux (8) à distance les uns des autres de façon que des pôles magnétiques des aimants de guide latéral (18) soient tournés vers des pôles de même nom des aimants latéraux (16).

9. Dispositif de distribution selon la revendication 8, **caractérisé par le fait que** les aimants de guide latéral (18) sont disposés sur chaque guide latéral (8) en deux rangées s'étendant à distance l'une au-dessus de l'autre.

10. Dispositif de distribution selon l'une des revendications précédentes, **caractérisé par le fait que** les aimants de face inférieure (12) et/ou les aimants latéraux (16) et/ou les aimants de face supérieure (28) sont disposés sur la ligne (2).

11. Dispositif de distribution selon l'une des revendications 1 à 9, **caractérisé par le fait que** la ligne (2) est disposée dans un support (10, 20, 30) qui porte les aimants de face inférieure (12) et/ou les aimants latéraux (16) et/ou les aimants de face supérieure (28).

12. Dispositif de distribution selon la revendication 11, **caractérisé par le fait que** les aimants de face inférieure (12) et/ou les aimants latéraux (16) et/ou les aimants de face supérieure (28) sont disposés sur la surface extérieure du support (10, 20, 30).

13. Dispositif de distribution selon la revendication 11, **caractérisé par le fait que** les aimants de face inférieure (12) et/ou les aimants latéraux (16) et/ou les aimants de face supérieure (28) sont disposés dans le support (10, 20, 30).

14. Dispositif de distribution selon la revendication 11, **caractérisé par le fait que** les aimants de face inférieure (12) et/ou les aimants latéraux (16) et/ou les aimants de face supérieure (28) sont disposés dans des ouvertures de réception dans la surface extérieure du support (10, 20, 30).

15. Dispositif de distribution selon l'une des revendications 11 à 14, **caractérisé par le fait que** le support est une enveloppe (10) entourant la ligne (2).

16. Dispositif de distribution selon l'une des revendications 11 à 14, **caractérisé par le fait que** le support est une masse de matière plastique (20) dans laquelle plusieurs lignes (2) sont noyées.

17. Dispositif de distribution selon l'une des revendications 11 à 14, **caractérisé par le fait que** le support est une chaîne porte-câbles (30).

18. Dispositif de distribution comprenant une chaîne porte-câbles recevant une ou plusieurs lignes et un bac de distribution (4) pour stocker la chaîne porte-câbles (30), le bac de distribution (4) présentant une surface de réception (6) et des guides latéraux (8), **caractérisé par le fait que** la chaîne porte-câbles (30) présente au moins un aimant (12, 16, 28) au moyen duquel elle peut être maintenue en suspension dans le bac de distribution 4 au moins sur une partie de sa longueur.

19. Dispositif de distribution selon la revendication 18, **caractérisé par le fait que** chaque fois au moins un aimant de face supérieure (28) est disposé sur la face supérieure d'un brin inférieur (36) de la chaîne porte-câbles (30) et sur la face inférieure d'un brin supérieur (38) de la chaîne porte-câbles (30) de façon qu'un pôle magnétique sur le brin supérieur (38) soit tourné vers un pôle magnétique de même nom sur le brin inférieur (36).

20. Dispositif de distribution selon la revendication 19, **caractérisé par le fait que** plusieurs aimants de face supérieure (28) sont disposés à distance les uns des autres sur la face inférieure du brin supérieur (38) et sur la face supérieure du brin inférieur (36) de façon que des pôles magnétiques sur le brin supérieur (38) soient tournés vers des pôles magnétiques de même nom sur le brin inférieur (36).

21. Dispositif de distribution selon l'une des revendications 18 à 20, **caractérisé par le fait que** la chaîne porte-câbles (30) présente au moins un aimant de face inférieure (12) sur sa face inférieure tournée vers la surface de réception (6) et que la surface de réception (6) présente au moins un aimant de surface de réception (14) qui est disposé de façon à repousser l'aimant de face inférieure (12) lors de son rapprochement.

22. Dispositif de distribution selon la revendication 21, **caractérisé par le fait que** plusieurs aimants de face inférieure (12) sont disposés le long de la face inférieure à distance les uns des autres et plusieurs aimants de surface de réception (14) disposés sur la surface de réception (6) à distance les uns des autres de façon que des pôles magnétiques sur la face inférieure soient tournés vers des pôles magnétiques de même nom sur la surface de réception (6).

23. Dispositif de distribution selon l'une des revendications 18 à 22, **caractérisé par le fait que** la chaîne porte-câbles (30) présente au moins un aimant latéral (16) sur ses côtés tournés vers les guides latéraux et que les guides latéraux (8) présentent chacun au moins un aimant de guide latéral (18) qui est disposé de façon qu'un pôle magnétique de l'aimant de guide latéral (18) soit tourné vers un pôle magnétique de même nom de l'aimant latéral (16).

24. Dispositif de distribution selon la revendication 23, **caractérisé par le fait que** plusieurs aimants latéraux (16) sont disposés le long de la chaîne porte-câbles (30) et plusieurs aimants de guide latéral (18) le long des guides latéraux (8), chaque fois à distance les uns des autres, de façon que des pôles magnétiques des aimants latéraux (16) soient tournés vers des pôles magnétiques de même nom des aimants de guide latéral (18).

25. Dispositif de distribution selon la revendication 24, **caractérisé par le fait que** les aimants de guide latéral (18) sont disposés en deux rangées s'étendant à distance l'une au-dessus de l'autre.

26. Dispositif de distribution selon l'une des revendications 18 à 25, **caractérisé par le fait que** le bac de distribution (4) présente une glissière (40) pour déposer le brin supérieur (38), qu'au moins un aimant de glissière (42) est disposé sur la glissière (40) et qu'au moins un aimant de face supérieure (28) est disposé sur la face inférieure du brin supérieur (38) tournée vers la glissière (40) de façon qu'un pôle magnétique de l'aimant de face supérieure (28) soit tourné vers un pôle magnétique de même nom de l'aimant de glissière (42).

27. Dispositif de distribution selon la revendication 26, **caractérisé par le fait que** plusieurs aimants de face supérieure (28) sont disposés à distance les uns des autres sur la chaîne porte-câbles (30) et plusieurs aimants de glissière (42) disposés à distance les uns des autres sur la glissière (40) de façon que des pôles magnétiques des aimants de face supérieure (28) soient tournés vers des pôles magnétiques de même nom des aimants de glissière (42).

28. Dispositif de distribution selon l'une des revendications précédentes, **caractérisé par le fait que** le bac de distribution (4) est réalisé dans un matériau non magnétique, de préférence en matière plastique, en aluminium ou en alliage d'aluminium.

29. Dispositif de distribution selon l'une des revendications précédentes, **caractérisé par le fait que** les aimants de guide latéral (18) et/ou les aimants de surface de réception (14) et/ou les aimants de glissière (42) sont disposés à la surface du bac de distribution (4).

30. Dispositif de distribution selon l'une des revendications précédentes, **caractérisé par le fait que** les aimants de guide latéral (18) et/ou les aimants de surface de réception (14) et/ou les aimants de glissière (42) sont insérés dans des ouvertures de réception dans le bac de distribution (4).

31. Dispositif de distribution selon l'une des revendications précédentes, **caractérisé par le fait que** les aimants de guide latéral (18) et/ou les aimants de surface de réception (14) et/ou les aimants latéraux (16) et/ou les aimants de face inférieure (12) et/ou les aimants de face supérieure (28) et/ou les aimants de glissière (42) sont des aimants permanents.

32. Dispositif de distribution selon l'une des revendications précédentes, **caractérisé par le fait que** les aimants de guide latéral (18) et/ou les aimants de surface de réception (14) et/ou les aimants latéraux (16) et/ou les aimants de face inférieure (12) et/ou les aimants de face supérieure (28) et/ou les aimants de glissière (42) sont des électro-aimants.

33. Chaîne porte-câbles destinée à être utilisée dans un dispositif de distribution selon l'une des revendications 18 à 32, **caractérisée par** au moins un aimant de face supérieure (28) sur la face supérieure de son brin inférieur (36) et au moins un aimant de face supérieure (28) sur la face inférieure de son brin supérieur (38), un pôle magnétique sur le brin inférieur (36) étant tourné vers un pôle magnétique de même nom sur le brin supérieur (38).

34. Chaîne porte-câbles selon la revendication 33, **caractérisée par le fait que** plusieurs aimants de face supérieure (28) sont disposés sur la face supérieure du brin inférieur (36) et sur la face inférieure du brin supérieur (38) de façon que des pôles magnétiques sur le brin supérieur (38) soient tournés vers des pôles magnétiques de même nom sur le brin inférieur (36).

35. Chaîne porte-câbles destinée à être utilisée dans un dispositif de distribution selon l'une des revendications 18 à 32, **caractérisée par** au moins un aimant de face inférieure (12) sur sa face inférieure et au moins un aimant latéral (16) sur les surfaces latérales des maillons de chaîne.

36. Chaîne porte-câbles selon la revendication 35, **caractérisée par le fait que** les aimants latéraux (16) sont disposés sur ses éléments latéraux (34).

37. Chaîne porte-câbles selon l'une des revendications 33 à 36, **caractérisée par le fait que** les aimants de face inférieure (12) et/ou les aimants de face supérieure (28) sont disposés sur les branches de liaison (32) reliant les éléments latéraux (34).

38. Chaîne porte-câbles selon l'une des revendications 33 à 36, **caractérisée par le fait que** les aimants de face inférieure (12) et/ou les aimants de face supérieure (28) sont disposés sur les éléments latéraux (34) de la chaîne porte-câbles (30).

39. Chaîne porte-câbles selon l'une des revendications 33 à 38, **caractérisée par le fait qu'**une paire d'aimants de face supérieure (28) s'étendant en direction longitudinale du maillon de chaîne est disposée symétriquement par rapport au plan médian longitudinal sur chaque maillon de chaîne.

40. Chaîne porte-câbles selon la revendication 39, **caractérisée par le fait que** les aimants de face supérieure (28) présentent des élévations (28a, 28b, 28c) s'étendant dans leur direction longitudinale, qui pointent à l'opposé des maillons de chaîne.

41. Chaîne porte-câbles selon la revendication 40, **caractérisé par le fait que** les élévations (28a, 28b; 28c) des aimants de face supérieure (28) de maillons de chaîne successifs sont disposées à des distances différentes de leurs côtés.

42. Chaîne porte-câbles selon la revendication 41, **caractérisée par le fait que** sur chaque maillon de chaîne les élévations (28a, 28b, 28c) sont disposées comme sur le n^{ième} maillon de chaîne suivant, n étant un nombre naturel.

43. Chaîne porte-câbles selon la revendication 42, **caractérisée par le fait que** n est supérieur ou égal à 3.

44. Chaîne porte-câbles selon l'une des revendications 33 à 43, **caractérisée par le fait qu'**elle présente sur ses côtés tournés vers les guides latéraux (8) d'un bac de distribution (4) des rouleaux destinés à rouler sur les guides latéraux (8).
